# EUROPEAN PATENT APPLICATION

(11) **EP 0 962 903 A1**
(43) Date of publication of application: **08.12.1999**
(21) Application number: 98811072.2
(22) Date of filing: 26.10.1998
(51) Int. Cl.: G08B 17/117, H02H 3/33

(54) **Safety system for suspending the supply of gas when a leak is detected**

(30) Priority: 05.06.1998 IT RM980359
(71) Applicant: Cauzzo, Feliciano, 21046 Malnate, Rovera (IT); Cauzzo, Italo, 6928 Manno (CH)
(72) Inventor: Cauzzo, Feliciano, 21046 Malnate, Rovera (IT)
(74) Representative: Fiammenghi-Domenighetti, Delfina

(57) **Abstract**

A description is given of a safety system (1) for suspending the supply of gas from a normally closed solenoid-operated valve (2) of a distribution network in one or more rooms in at least one of which a gas leak has occurred, this leak being detected by sensors (3, 4) installed in the said rooms, in which the said sensors (3, 4) are connected to the electrical mains (11) before a magnetothermal residual current operated circuit breaker (5) which is capable, when actuated, of isolating from the said mains all the circuits present in the said rooms, including that supplying the said normally closed solenoid-operated valve (2) used to supply the gas, the said sensors (3, 4) being connected to the said residual current operated circuit breaker (5) in such a way as to actuate it when at least one of them detects the presence of gas.

## Description

The present invention relates to the field of safety systems intended to prevent accidents in environments in which gas is supplied for use in heating, for cooking ovens or for other similar applications.

The safety systems existing at the present time have certain serious limitations, consisting essentially in the fact that, although they act on the gas supply, they do not act in any way on the electrical system of the rooms in which a leak may have occurred; consequently, it is possible for an explosion to occur as a result of the ignition caused by electric arcs produced by the operation of devices such as switches, bells, etc., which may be present in the rooms in which the gas has leaked.

Moreover, when they act by means of residual current operated circuit breakers which operate a solenoid-operated supply valve, they are ineffective when these switches are inoperative as a result of faults or defects in manufacture.

To avoid these problems, the inventor of the present invention has devised a safety system such that, when one of the sensors connected to it detects the presence of gas in a room, it acts on a residual current operated circuit breaker (if necessary on what is known as the "life-saving" circuit breaker if this is already present) in such a way as to cut off the power to all the electrical systems present in the room.

The circuit of the safety system according to the invention is also such that, by means of a multiple-consent system which will be explained subsequently, the same result in terms of safety is assured even if the said residual current operated circuit breaker fails to operate or operates defectively.

The subject of the present invention is a safety system as described in the precharacterizing clause of the attached Claim 1, characterized by the characterizing part of this claim.

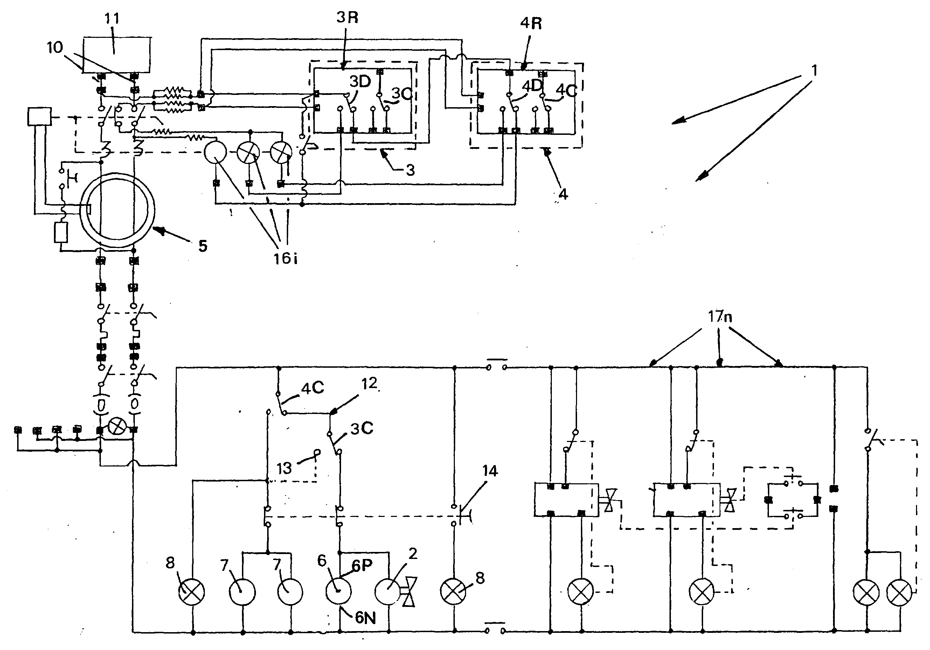

An illustrative embodiment of a system according to the invention will now be described in greater detail, with additional reference to the attached figure, which represents its electrical circuit.

As is shown in the figure, a residual current operated circuit breaker 5, assumed by the inventor to be of the commonly used magnetothermal type, is connected after the meter 11 of the electrical mains supply 10 to a generic user consisting of a residential unit comprising a plurality of rooms, and all the conductors used to supply the electrical devices 17n of the residential unit are branched from this circuit breaker.

A plurality of sensors 3, 4, each comprising a relay 3R, 4R with at least two contacts 3C, 3D and 4C, 4D, are connected in parallel before the circuit breaker.

These sensors 3, 4, of the acoustic detection type for example, are capable of actuating these relays 3R, 4R and thus switching their contacts when they detect the presence of gas in the room in which they are installed.

For the most common cases, the inventor provides for the installation of one of these sensors in each of the rooms in question, and for their provision with a hermetically sealed relay.

The most suitable position for installing a sensor is considered by the inventor to be at a distance of approximately 30 cm from the floor or ceiling of the room, according to whether the gas in use has a specific gravity higher or lower than that of air.

In the system illustrated, two rooms are taken into consideration, and a sensor 3, 4 is installed in each of them. By way of example, it is assumed that the sensor 3 is installed in a kitchen where gas is used, and that the other sensor 4 is installed in the boiler room of the residential unit where the gas is used for heating.

One contact 3C, 4C of each of the relays of the sensors 3R, 4R is connected in series to the other, in such a way as to complete a branch of the circuit 12, shown in the lower part of the figure, which forms one phase of the electrical power supply to the solenoid-operated valve 2 through which the gas is supplied to the residential unit in question.

This solenoid-operated valve 2 is of the commonly used type; in other words it is normally closed when it is not energized.

The said circuit section 12 is also connected to one phase 6P of a contactor 6, which is therefore in parallel with the solenoid-operated valve 2, and which is also provided with a further phase 6Q, in addition to the phase 6N connected to the neutral phase of the mains, which closes the power supply circuit of a plurality of alarm signal devices of the acoustic type 7 and of the light type 8 disposed at the points of the residential unit considered most suitable for transmitting an alarm signal (for example, in a room of the apartment, in the boiler room, in any communal space in the case of joint-ownership buildings having a plurality of apartments, etc.).

When one of the sensors 3 or 4 detects the presence of gas in the room in which it is installed, the corresponding relay 3R or 4R is actuated, causing switching of the corresponding contacts 3C, 3D or 4C, 4D which are connected to the circuit of the residual current operated circuit breaker 5 and to the circuit section 12 described above, respectively.

Consequently, the residual current operated circuit breaker 5 cuts off the power to the whole electrical system except for the sensors 3, 4, thus avoiding the risk of accidental explosions.

The switching of even one of the contacts 3C, 4C causes a break in the circuit section 12 which forms one phase of the power supply to the said normally closed solenoid-operated valve 2, which closes and thereby cuts off the supply of gas.

It may be noted that the operation of the residual current operated circuit breaker 5 would have this effect even on its own: the inventor, by making the energizing of the circuit section 12 depend on the "consent" of both the sensors 3 and 4 provided by the position of both the contacts 3C, 4C in series with each other, has achieved practically 100% reliability of operation of the system, since the solenoid-operated valve 2 is switched off even if the residual current operated circuit breaker 5 fails to operate. To signal an alarm situation detected by the system, the inventor has provided for the connection of a electromechanical contactor 6 of a known type with two poles 6P and 6N, as shown in the figure.

When power to the pole 6P is cut off as a result of the switching of the contacts 3C, 4C of the section 12, a supply circuit is made to alarm devices of the acoustic type 7 or light type 8, which continue to operate until the risk situation is terminated and a manual key-operated switch 14 is operated to switch the alarms off and further isolate the solenoid-operated valve 2.

The supply to the solenoid-operated valve 2 can also be restored by the said switch 14 when the intervention of the sensors 3, 4 ceases.

It should be noted that the circuits of the said devices 7, 8 are closed by the switching of the contacts 3C, 4C, as shown in the figure, in such a way that they are energized when the presence of gas is detected by any of the contacts 3C, 4C connected to the two sensors 3, 4, or by a single one of them (4C in the drawing); in the latter case, the terminal 13 may be omitted (with the conductors shown in broken lines).

This solution may be advisable when the alarm devices 7, 8 are situated, for example, in a boiler room, and it is not desirable for these to be actuated when only one other sensor, situated in the rooms of an apartment, signals the presence of gas.

For the purpose of signalling within the apartment only an alarm situation in any room, the inventor has provided for the use of one or more indicator lamps 16i, which receive one supply phase according to known methods through one contact of each of the relays 3R, 4R when one or both of these signals the presence of gas.

Clearly, a person skilled in the art may construct a system different from that described and represented in the figure, to comply with different requirements and situations, while nonetheless deriving it from the concepts expressed in the attached Claim 1.

Other embodiments produced in this way fall within the scope of protection conferred by the present patent application.

## Claims

1. Safety system (1) for suspending the supply of gas from a normally closed solenoid-operated valve (2) of a distribution network in one or more rooms in at least one of which a gas leak has occurred, this leak being detected by sensors (3, 4) installed in the said rooms, characterized in that the said sensors (3, 4) are connected to the electrical mains (10) before a magnetothermal residual current operated circuit breaker (5) which is capable, when actuated, of isolating from the said mains all the circuits present in the said rooms, including that supplying the said normally closed solenoid-operated valve (2) used to supply the gas, the said sensors (3, 4) being connected to the said residual current operated circuit breaker (5) in such a way as to actuate it when at least one of them detects the presence of gas.

2. Safety system according to Claim 1, characterized in that the circuits of the said sensors (3, 4) comprise relays (3R, 4R) with at least one contact (3C, 3D) connected in series and also connected to one of the power supply phases of the said normally closed solenoid-operated valve (2) in such a way as to cut off the supply to the solenoid-operated valve (2) when one of the sensors (3, 4) is actuated, and which is also connected to one phase of a contactor (6) which, when this phase is cut off as a result of the detection of gas by at least one of the said sensors (3, 4), isolates the electrical system of one or more rooms in which the presence of gas has been detected.

3. Safety system according to Claim 1 or 2, characterized in that it is provided with acoustic and/or light alarm signalling devices which come into action when at least one of the said sensors has detected the presence of gas in one or more rooms.

4. Safety system according to Claim 3, in which the said devices consist of alarm indicator lamps connected in such a way that they are illuminated to indicate the room(s) in which the presence of gas has been detected by the sensors.

5. Electrical system according to one of the preceding claims, in which the said devices also consist of acoustic alarms connected in such a way that they are actuated when the presence of gas has been detected in at least one of the said rooms.

6. System according to one of the preceding claims, provided with systems for the manual resetting of the circuits broken as a result of the presence of gas in one or more rooms and for the silencing of the acoustic or light signals generated by the system also as a result of the said presence of gas.

7. System according to Claim 4, comprising:
a) a magnetothermal residual current operated circuit breaker (5) connected to the electrical mains (10);
b) one or more sensors (3, 4) in parallel with each other, connected to the said electrical mains (10) before the said residual current operated circuit breaker (5) and each comprising a relay (3R, 4R) having at least two contacts which is actuated by the corresponding sensor (3, 4) when it detects the presence of gas in the room in which it is installed, one of the said contacts being connected to the residual current operated circuit breaker (5);
c) a normally closed solenoid-operated valve (2), one phase of whose power supply consists, when the said sensors (3, 4) do not detect the presence of gas, of a section of circuit comprising one contact (3C) of each relay (3R), connected in series to the corresponding contact (4C) of the following relay (4R);
d) a contactor (6) which is connected in parallel to the said normally closed solenoid-operated valve (2) when the sensors (3, 4) have not detected the presence of gas, and which is switched off when the supply to the said phase of the normally closed solenoid-operated valve (2) is cut off by the action of the sensors (3, 4) acting through the corresponding relays (3R, 4R) as a result of the detection of the presence of gas, and circuits which supply acoustic (7) and/or light (8) alarm signalling devices are energized;
e) a device (14) which can be operated by means of a key to switch off the said alarm devices (7, 8) and restore the initial state of the said contactor (6) when the supply of gas by the said normally closed solenoid-operated valve is to be restored.

8. System according to one of the preceding claims, in which the said sensors (3, 4) are of the acoustic type.
